# EUROPEAN PATENT APPLICATION

(11) **EP 4 478 336 A2**
(43) Date of publication of application: **18.12.2024**
(21) Application number: 24210651.6
(22) Date of filing: 22.09.2021
(51) Int. Cl.: G09B 9/00

(54) **WEAPON TRAINING ASSEMBLY**

(30) Priority: 23.09.2020 IL 27753420
(62) Divisional of application: 21870569.7
(71) Applicant: Bagira Systems Ltd., 5886708 Holon (IL)
(72) Inventor: MIZRACHI,, Yaron, 6997107 Tel Aviv (IL)
(74) Representative: TRBL Intellectual Property

(57) **Abstract**

A weapons training assembly (WTA) for use with a weapon comprising: a magazine; a weapon adaptor, and a small arms transmitter (SAT), wherein one or both of the magazine and SAT comprise laser detectors, and wherein the weapon adaptor comprises one or more bolt detectors.

## Description

### CROSS REFERENCE TO RELATED APPLICATIONS

This application claims priority from IL Patent Application No. 213144 filed September 23, 2020, which is expressly incorporated herein by reference in its entirety.

### TECHNICAL FIELD

Embodiments disclosed herein relate to simulator systems and, in particular, to a weapon training system.

### BACKGROUND

Intensive and frequent training of armed forces personnel is indispensable for the acquisition of the skills necessary to successfully complete military and law enforcement missions. However, the training of armed forces personnel to correctly and reliably handle weaponry is inherently dangerous in case live ammunition is being used for such training. Therefore, weapon simulator systems have been developed that do not require live ammunition during training of armed forces personnel in the handling of handheld or man-portable weapons.

Such a weapon simulator system may for example include a laser transmitter that is coupled to or mounted on a portable weapon such as, for example, a M16 rifle or a machine gun. The laser transmitter may emit laser light responsive to the pulling of the trigger of the weapon. The propagation of the emitted laser light is descriptive of the trajectory of live ammunition that would be fired by the weapon responsive to the pulling of the trigger.

Each soldier/trainee may be fitted with laser receivers for detecting a hit from another trainee to determine the location of a hit and optionally the time of the event and the identity of the shooter (if encoded by the emitted laser light). The laser receivers are generally incorporated into training vests and/or helmets that must be worn by trainees. These training vests add an additional clothing layer that is not part of the normal troop combat gear, thus disrupting the realism of the training. Further, training vests add an additional cost to the training system, require power and charging and must be managed and accounted for in training sessions.

Such a weapon simulator system may further include a trigger detector that needs to be mounted onto the trigger of the weapon for detecting a press of the trigger.

Most weapons include a fire-selector allowing changes to the fire-mode of the weapon, such as SAFE, SEMI, BURST, AUTO, and so forth. Such a weapon simulator system may further include a fire selector detector that needs to be mounted onto the fire selector of the weapon for detecting of a fire selector state.

### SUMMARY

This disclosure describes systems and methods for weapons training. A weapon training assembly (WTA) as disclosed herein includes a magazine, a small arms transmitter (SAT), and a weapon adaptor. The components of the WTA are mounted within and on a weapon enabling use of the real weapon for simulated weapons training. The SAT is mounted on the weapon barrel and the combined magazine and weapon adaptor are inserted into the magazine well of the weapon.

Advantageously, both of the SAT and magazine include optical detectors for detecting virtual hits from fellow trainees. Thus, the disclosed WTA provides for installation of optical detectors onto a weapon (as part of the same system used for virtual firing) and obviates the need for a separate detection vest and/or helmet. Further, the WTA includes a bolt detection mechanism for identifying charging of the bolt of the weapon in order to include weapon charging in the simulation. Still further, the WTA includes a trigger detector to detect trigger usage without the need for a specific trigger attachment on the trigger.

Still further, the WTA includes a fire selector detector to detect changes in the fire detector position without the need for a specific detector attachment on the fire selector. In some embodiments, the trigger detector and fire selector detector are combined.

In some embodiments, a WTA for use with a weapon comprises a magazine and a SAT, wherein the magazine comprises magazine optical detectors and the SAT comprises SAT optical detectors. In some embodiments, the WTA further comprises one or more bolt detectors.

In some embodiments, the WTA further comprises a weapon adaptor and the one or more bolt detectors are positioned on the weapon adaptor. In some embodiments, the WTA further comprises a trigger detector. In some embodiments, the weapon adaptor is adapted for installation in the weapon. In some embodiments, the magazine is sized and adapted for insertion into a magazine well of the weapon.

In some embodiments, the SAT comprises a barrel mount for mounting on a barrel of the weapon. In some embodiments, the SAT comprises a shot-flash light. In some embodiments, the magazine comprises a component selected from the group comprises a GPS receiver, a mobile data communication device, a short-range communication device, an audio amplifier, a battery, a speaker, and a virtual-ammunition count indicator.

In some embodiments, the weapon adaptor comprises a virtual round loaded indicator. In some embodiments, the magazine optical detectors and the SAT optical detectors are Multiple Integrated Laser Engagement System (MILES) compatible laser detectors.

In some embodiments, a method for weapons training comprises attaching the WTA to a weapon, inserting the magazine into the magazine well of the weapon to load virtual rounds, and charging the weapon with a bolt of the weapon to chamber one of the virtual rounds. In some embodiments, a method further comprises detecting a trigger press by the trigger detector and firing one of the virtual rounds. In some embodiments, the firing of one of the virtual rounds comprises one or more of: decreasing the number of available virtual rounds in the magazine, causing a laser transmission from a laser transmitter on the SAT, causing a sound from the speaker, or causing a light flash from shot-flash light.

In some embodiments, a method further comprises when the virtual rounds are exhausted, requiring removal and reinsertion of the magazine for reloading virtual rounds. In some embodiments, a method further comprises, charging of the bolt for chambering one of the virtual rounds for firing. In some embodiments, a method further comprises detecting a hit by one of the magazine optical detectors or SAT optical detectors. In some embodiments, when a hit is detected, performing one or more of: emitting a sound, preventing further virtual shooting from the weapon, or flashing a light source.

In some embodiments, a WTA for use with a real weapon comprises a plurality of optical detectors, wherein the plurality of optical detectors are adapted for attachment to the real weapon. In some embodiments, the WTA further comprises a magazine and a SAT, wherein the plurality of optical detectors are provided on one or both of the magazine and/or the SAT and wherein the magazine and the SAT are adapted for attachment to the real weapon.

In some embodiments, a WTA for use with a real weapon comprises a bolt detector for attachment to the real weapon. In some embodiments, the bolt detector is provided on the magazine, and the magazine and the SAT are adapted for attachment to the real weapon. In some embodiments, the WTA further comprises a weapon adaptor attached to the magazine, wherein the bolt detector is provided on the weapon adaptor.

As used herein the terms virtual ammunition, virtual firing, virtual hit and similar terms relate to use of the disclosed system in methods for simulated use of weapons such as for training purposes.

### BRIEF DESCRIPTION OF THE DRAWINGS

Aspects, embodiments and features disclosed herein will become apparent from the following detailed description and claims when considered in conjunction with the accompanying drawings. In the drawings:
FIG. 1 shows a weapons training assembly according to some embodiments.
FIGS. 2A-2B show a small arms transmitter of a weapons training assembly according to some embodiments.
FIGS. 3A-3F show a weapon adaptor and magazine of a weapons training assembly according to some embodiments.
FIG. 4 is a flowchart showing a process for operation of a weapons training assembly as part of a weapon training session according to some embodiments.

### DETAILED DESCRIPTION

Reference will now be made in detail to non-limiting examples of this disclosure, examples of which are illustrated in the accompanying drawings. The examples are described below by referring to the drawings, wherein like reference numerals refer to like elements. When like reference numerals are shown, corresponding description(s) are not repeated, and the interested reader is referred to the previously discussed figure(s) for a description of the like element(s).

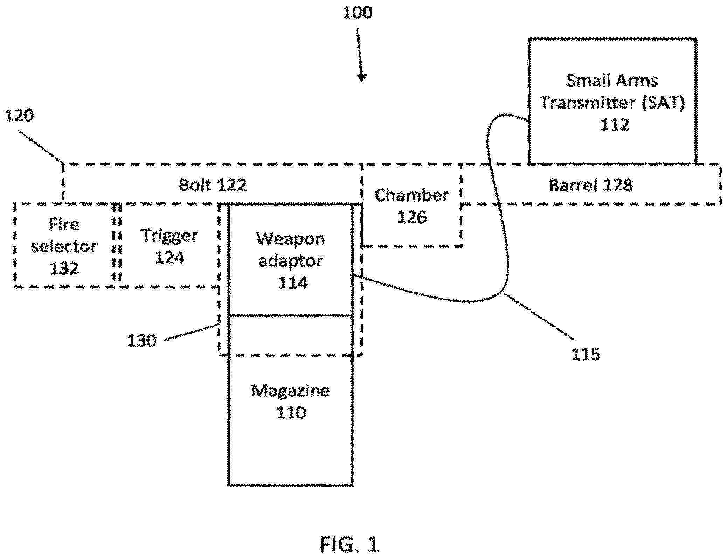

Embodiments disclosed herein relate to a weapons training assembly (WTA). FIG. 1 shows a weapons training assembly according to some embodiments. The components of WTA **100** are mounted on and within a weapon **120.** WTA **100** includes a magazine **110,** small arms transmitter (SAT) **112** and weapon adaptor **114.** In some embodiments, cable **115** connects weapon adaptor **114** (and magazine **110)** with SAT **112.** In some embodiments, weapon adaptor **114** and magazine **110** are connected wirelessly with SAT **112** and cable **115** is not required.

Magazine **110** includes a microcontroller (MCU) **116,** which is a computing device for managing functionality for WTA **100,** including but not limited to: processing, storage, wired and wireless communication, laser actuation and detection, bolt and trigger detection, and sound and light actuation. SAT **112** also includes an MCU **118,** which is a computing device in communication with MCU **116** for managing SAT functionality including but not limited to: generating laser codes, generating flashes, decoding incoming lasers and transmitting the incoming laser decoded info to MCU **116.**

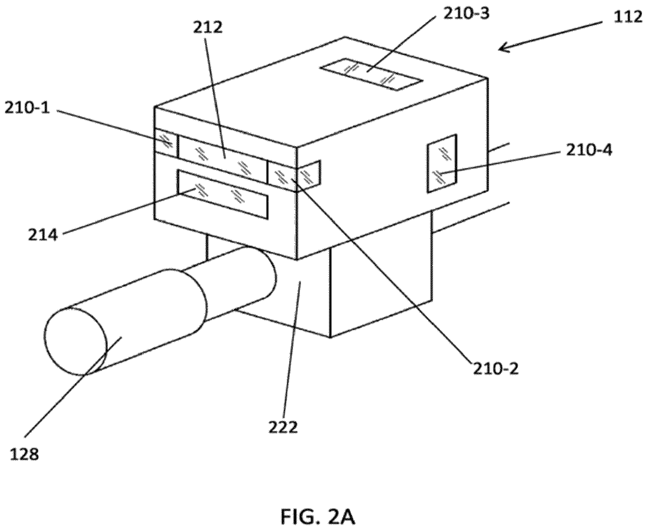

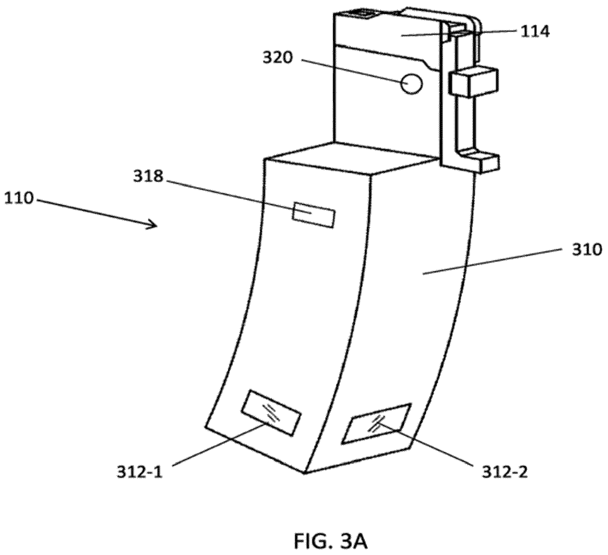

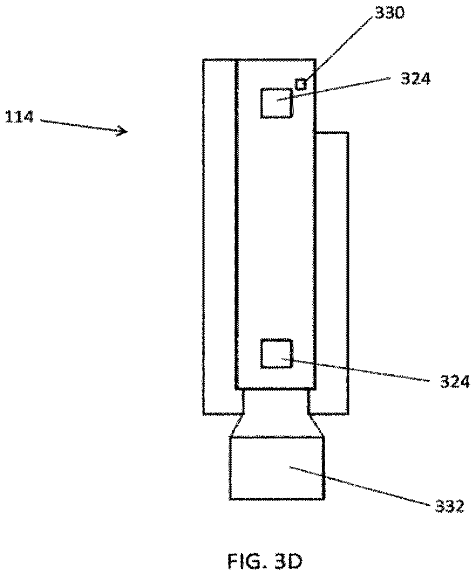

A simplified form of weapon **120** is shown in **FIG. 1** for illustrative purposes. Weapon **120** includes a bolt **122,** a trigger **124,** a fire selector **132,** a chamber **126,** a barrel **128,** and a magazine well **130.** In some embodiments, weapon **120** is a real weapon capable of firing live ammunition (such as an M4, M16, M60, K1, K2, and K3) that is adapted for training by using the WTA **100** disclosed herein. Alternatively, weapon **120** is a replica of a real weapon that cannot fire live ammunition or is a training weapon that is not a replica of another weapon. It should be appreciated that weapon **120** further includes other typical weapon components that are not shown for simplicity. The components of WTA **100** are further described below with reference to **FIGS. 2A-2B** and **3A-3E.**

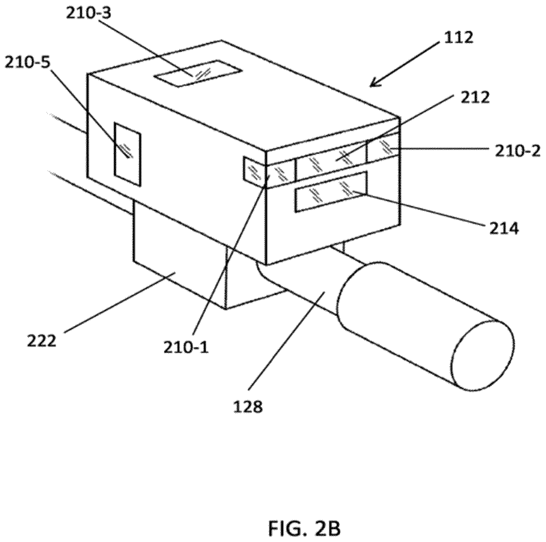

**FIGS. 2A-2B** shows details of a small arms transmitter of a weapons training assembly according to some embodiments. As shown in **FIGS. 2A-2B****,** SAT **112** is shown attached to barrel **128** of weapon **120** using a barrel mount **222.** SAT **112** includes one or more laser detectors **210.** In some embodiments, five laser detectors **210** are provided on the front, top and sides of SAT **112.** These are shown in **FIGS. 2A** and **2B** as laser detectors **210-1, 210-2, 210-3, 210-4** and **210-5.** In some embodiments, laser detectors **210** are Multiple Integrated Laser Engagement System (MILES) compatible laser detectors.

SAT **112** further includes a laser transmitter **214.** In some embodiments, laser transmitter **214** is a MILES compatible laser transmitter. In some embodiments, multiple laser transmitters **214** are provided.

SAT **112** further includes a shot-flash light **212** that is activated when a shot is fired by WTA **100.** In some embodiments, shot-flash light **212** may include for example an LED, a laser, or an infrared (IR) light.

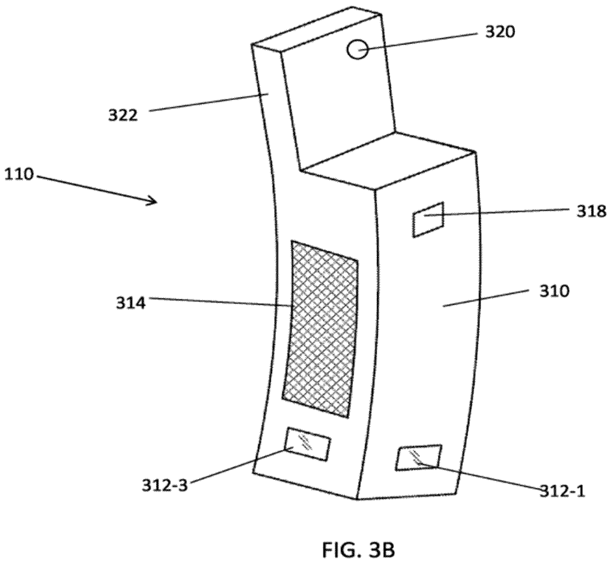

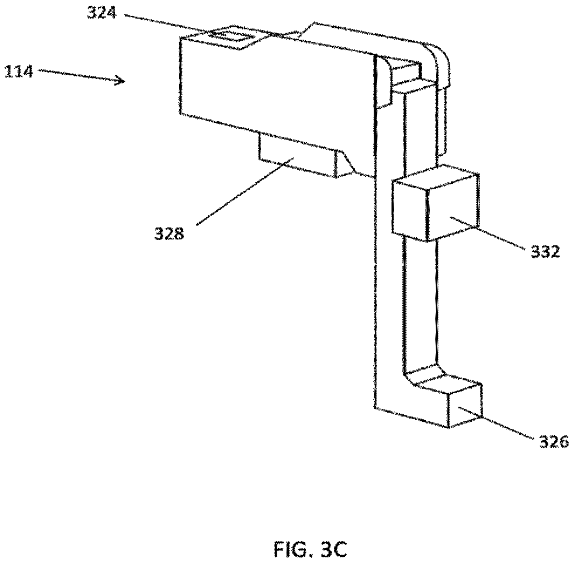

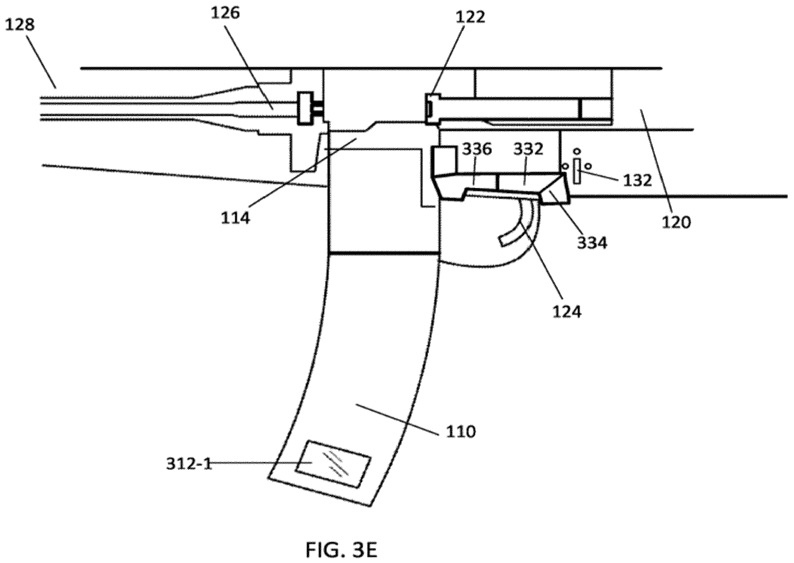

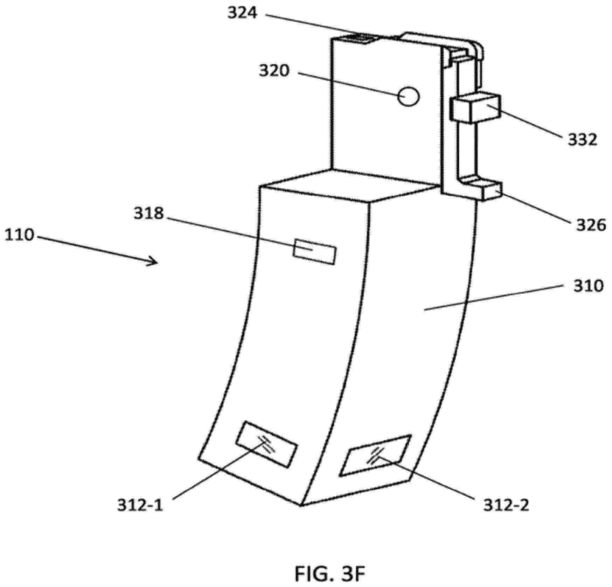

**FIGS. 3A-3F** show a weapon adaptor **114** and magazine **110** of a weapons training assembly **100** according to some embodiments. **FIGS. 3A** and **3B** show alternate views and details of magazine **110.** **FIGS. 3C-3D** show alternate side and top views and details of weapon adaptor **114.** **FIG. 3E** shows weapon **120** having magazine **110** and weapon adaptor **114** inserted therein. **FIG. 3F** shows an alternative embodiment of magazine **110.**

Magazine **110** includes a magazine body **310** generally shaped to resemble a real magazine and sized and adapted for insertion into magazine well **130.** For example, in some embodiments, a magazine catch **320** is provided on magazine top **322** to mechanically couple to a matching feature (not shown) on an internal wall of magazine well **130.** It should be appreciated that magazine **110** and weapon adaptor **114** are adapted in size, shape and position of sensors for the particular weapon **120** that they will be used within. Although **FIGS. 3A-3E** show weapon adaptor **114** and magazine **110** as separate components, in some embodiments, such as shown in **FIG. 3F****,** magazine **110** is a single unit including all of the components of weapons adaptor **114** and in the embodiment of **FIG. 3F** no weapon adaptor **114** is required.

Magazine **110** includes one or more laser detectors **312.** In some embodiments, four laser detectors **312** are provided, on each of four sides of magazine **110.** Laser detectors **312-1, 312-2,** and **312-3** are shown in **FIGS. 3A** and **3B****.** In some embodiments, a laser detector **312** is provided on the underside (not shown) of magazine **110.** In some embodiments, laser detectors **312** are MILES compatible laser detectors.

In some embodiments, magazine **110** includes some or all of the following internal components (not shown): a GPS receiver, a mobile data communication device, a short-range communication device, and an audio amplifier. Magazine **110** includes a battery that provides power to magazine **110,** SAT **112** and weapon adaptor **114.** In some embodiments, SAT **112** includes a battery and does not receive power from magazine **110.** Magazine **110** also includes a speaker **314** and a virtual-ammunition count indicator **318.** Magazine body **310** may be made of a material similar to or identical with that of a real magazine, e.g. a metal or reinforced plastic. In some embodiments, speaker **314** is capable of outputting up to **135** dB firing sounds.

Weapon adaptor **114** is installed inside weapon **120** at the top of magazine well **130.** Once installed, it is not possible for cartridges of a regular cartridge-carrying magazine to bypass weapon adaptor **114** for chambering as weapon adaptor **114** blocks the top of magazine well **130.** When magazine **110** is inserted into magazine well **130,** weapon adaptor **114** attaches to the magazine top part **322** of magazine **110** via a weapon adaptor connector **328.** In some embodiments, a mechanical sliding spring connector (not shown) on weapon adaptor **114** holds magazine top part **322.**

**FIGS. 3A** and **3E** show weapon adaptor **114** attached to magazine **110.** The attachment of weapon adaptor **114** to magazine **110** enables data communication between weapon adaptor **114** and magazine **110** via weapon adaptor connector **328.** Weapon adaptor **114** includes one or more bolt detectors **324** for detecting the movement and positioning of bolt **122.** Thus, weapon adaptor **114** can detect that a trainee has charged bolt **122** and may "refill" a virtual bullet count. In some embodiments, bolt detectors **324** may include magnets for detecting bolt **122.**

In some embodiments, weapon adaptor **114** further includes a virtual round loaded indicator **330.** In some embodiments, following virtual charging of weapon **120** (pulling back and releasing bolt **122** with weapon adaptor inside weapon **120),** virtual round loaded indicator **330** is lit to indicate that a virtual round is loaded for firing.

Weapon adaptor further includes a trigger detector **332.** The position and type of trigger detector **332** will depend on the weapon type and operation of the trigger **124.** Trigger detector **332** includes one or more of a trigger contact sensor, hall sensor, inductive sensor or optical sensor. In some embodiments, trigger detector **332** detects trigger **124** movement by analog measurement of the trigger stroke.

Weapon adaptor **114** further includes a fire selector detector **334.** In some embodiments, one or more magnets **336** are provided for attachment of the detectors **332** and **334** to the weapon **120.** Detectors **332** and **334** are in data communication with weapon adaptor **114** via wired or wireless communications. It should be appreciated that the shape of a trigger detector **332** and fire selector detector **334** as well as the position of magnets **336** will be dependent on the physical structure of the weapon **120** to be used. The position and type of fire selector detector **334** will depend on the weapon type and operation of the fire selector **132.**

In some embodiments, as shown in FIG. 3E, detectors **332** and **334** are respectively positioned proximal to trigger **124** and fire selector **132.** In some embodiments, fire selector detector **334** senses the position of fire selector **132** by a change in electromagnetic (EM) field caused by movement of fire selector **132,** as detected by EM field sensor/s within the proximal fire selector detector **334.** In some embodiments, trigger detector **332** may detect a trigger pull by trigger **124** based on a change in the EM field change sensed by the EM field sensor/s within proximal fire selector detector **334.** In some embodiments, fire selector detector **334** may include one or more of a contact sensor, hall sensor, inductive sensor, or optical sensor for sensing the position of fire selector **132.**

Weapon adaptor **114** includes a wired communication and power connector **326** for connecting weapon adaptor **114** (and magazine **110)** with SAT **112** using cable **115 (****FIG. 1****).** In some embodiments, communication between SAT **112** and weapon adaptor **114** and/or magazine **110** is wireless. In some embodiments, SAT **112** includes its own power supply and no wired connection is required between SAT **112** and magazine **110.**

In use, magazine **110** is inserted and removed from a weapon just like a real magazine. Count indicator **318** indicates the number of virtual shots fired and magazine **110** stops the virtual firing after a predetermined number of virtual shots (e.g. **29** virtual shots in a regular training magazine), when the magazine is "empty". The magazine must then be removed and reinserted and a bolt **122** charge must be detected by weapon adaptor **114** to reset the virtual ammunition count.

When trigger **124** is pressed, the action is detected by trigger detector **332** and conveyed to magazine **110.** The virtual ammunition count is checked to see if there are virtual cartridges in the magazine. If Yes, a shot accompanied by sound and light effects is fired. If No (the counter indicates zero virtual cartridges), there is no shot. The trainee then needs to change the magazine, i.e. remove it from, and reinsert it into the weapon and charge the bolt.

Upon detection and registration of a hit by one of detectors **210** and/or **312,** magazine MCU **116** may perform post-hit actions. Post hit actions include but are not limited to emitting a sound such as through speaker **314,** preventing further shooting from weapon **120,** and/or flashing a light source worn by the trainee.

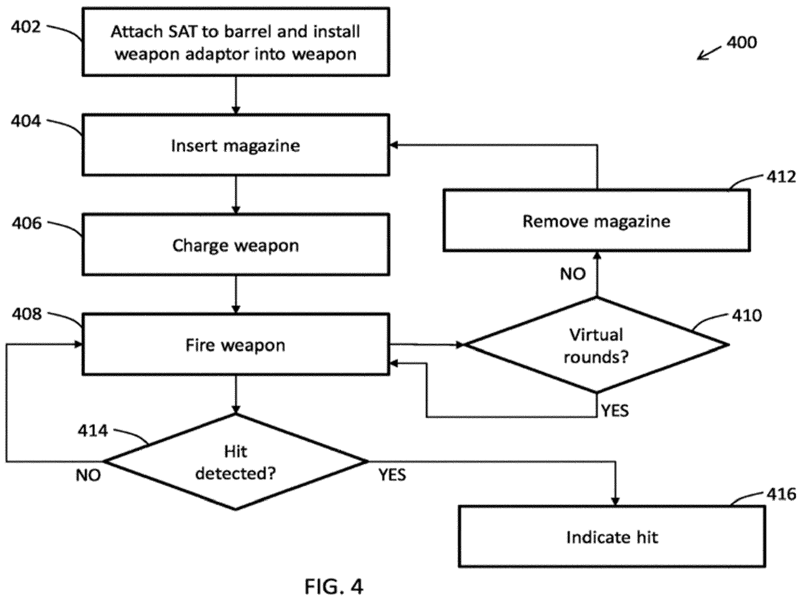

**FIG. 4** is a flowchart showing a process **400** for operation of a weapons training assembly as part of a weapon training session. Process **400** makes use of the WTA **100** mounted on and within a weapon **120** as described above. Prior to starting use of WTA **100,** the weapon is unloaded including removal of any magazines and checking for and removal of any loaded cartridges.

In step **402** of process **400,** weapon adaptor **114** is installed into the top of magazine well **130.** SAT **112** is clamped onto barrel **128** using barrel mount **222.** SAT **112** is connected to weapon adaptor **114** using connector **326.** In step **404,** magazine **110** is inserted into magazine well **130** to engage with weapon **120,** such as with magazine catch **320.** Magazine **110** engages and connects to weapon adaptor connector **328.** Magazine **110,** SAT **112** and weapon adaptor **114** are now activated and in data communication.

Further, magazine **110** is updated to have a full magazine's worth of virtual rounds for use in the weapon training. The number or level of fullness of magazine **110** with virtual rounds is shown by ammunition count indicator **318.**

In step **406,** weapon **120** is charged by charging bolt **122.** Weapon adaptor **114** detects the weapon charge and "chambers" a virtual round as indicated by virtual round indicator **330.**

In some embodiments, fire selector **132** is switched form a "safety" position to a firing position and fire selector detector **334** detects that the weapon may now be fired.

Weapon **120** is now ready to be virtually fired as part of training.

In step **408,** a trainee presses trigger **124** to fire a virtual round. The trigger press is detected by trigger detector **332** of weapon adaptor **114** and communicated to magazine MCU **116.** In response to firing a virtual round, MCU **116** performs one or more of: decreasing the number of available rounds in magazine **110;** causing a laser transmission from laser transmitter **214;** causing a sound from speaker **314;** and/or causing a light flash from shot flash light **212.** Virtual rounds are targeted according to the aiming direction of laser transmitter **214.** WTA **100** may be used for firing at other trainees having detectors **210** and/or **312** attached to their weapons, and/or trainees with detectors on their clothing (helmets, vests), and/or static or mobile targets.

After step **408,** before another virtual round can be fired, MCU **116** determines whether any virtual rounds remain. As long as virtual rounds remain, they may be fired as step **408** is repeated. When no virtual rounds remain, the trainee needs to perform those actions that simulate reloading and charging the weapon. Thus, in step **412,** magazine **110** must be removed and then steps **404** (insert magazine) and **406** (charge weapon) are performed again. After step **406,** weapon **120** is again ready for virtual firing.

In step **414,** it is detected by any of laser detectors **210** and/or **312** that a laser virtual shot of another weapon has "hit" weapon **120** (herein referred to as a "virtual hit"). Detection of a hit is here shown as occurring after step **408,** but in practice a hit may be detected by detectors **312** even before insertion of magazine **110** in step **404.** Detection of a hit by detectors **210** can only occur after step **404** once magazine **110** is supplying power to SAT **112.** In some embodiments, a head detector on a helmet (not shown) is also able to detect hits. The hit detection is communicated to MCU **116.** In step **416,** the hit is indicated by one or more of: emitting a sound such as through speaker **314,** preventing further shooting from weapon **120,** and/or flashing a light source worn by the trainee such as on a helmet.

Unless otherwise defined, all technical and scientific terms used herein have the same meaning as commonly understood by one of ordinary skill in the art. The materials, methods, and examples provided herein are illustrative only and not intended to be limiting.

Implementation of the method and system of the present disclosure may involve performing or completing certain selected tasks or steps manually, automatically, or a combination thereof. Moreover, according to actual instrumentation and equipment of preferred embodiments of the method and system of the present disclosure, several selected steps may be implemented by hardware (HW) or by software (SW) on any operating system of any firmware, or by a combination thereof. For example, as hardware, selected steps of the disclosure could be implemented as a chip or a circuit. As software or algorithm, selected steps of the disclosure could be implemented as a plurality of software instructions being executed by a computer using any suitable operating system. In any case, selected steps of the method and system of the disclosure could be described as being performed by a data processor, such as a computing device for executing a plurality of instructions.

It should be appreciated that the above described methods and apparatus may be varied in many ways, including omitting or adding steps, changing the order of steps and the type of devices used. It should be appreciated that different features may be combined in different ways. In particular, not all the features shown above in a particular embodiment or implementation are necessary in every embodiment or implementation of the invention. Further combinations of the above features and implementations are also considered to be within the scope of some embodiments or implementations of the invention.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made.

### Embodiments of the invention

In a first inventive aspect, the invention provides a weapons training assembly (WTA) for use with a weapon, comprising:
a magazine; and
a small arms transmitter (SAT),
wherein the magazine comprises magazine optical detectors and wherein the SAT comprises SAT optical detectors.

In a further embodiment, the WTA further comprises one or more bolt detectors.

In a further embodiment, the WTA further comprises a weapon adaptor and wherein the one or more bolt detectors are positioned on the weapon adaptor.

In a further embodiment, the WTA further comprises a trigger detector and/or a fire selector detector.

In a further embodiment, the weapon adaptor is adapted for installation in the weapon.

In a further embodiment, the magazine is sized and adapted for insertion into a magazine well of the weapon.

In a further embodiment, the SAT comprises a barrel mount for mounting on a barrel of the weapon.

In a further embodiment, the SAT comprises a shot-flash light.

In a further embodiment, the magazine comprises a component selected from the group consisting of a GPS receiver, a mobile data communication device, a short range communication device, an audio amplifier, a battery, a speaker, and a virtual-ammunition count indicator.

In a further embodiment, the weapon adaptor comprises a virtual round loaded indicator.

In a further embodiment, the magazine optical detectors and the SAT optical detectors are Multiple Integrated Laser Engagement System (MILES) compatible laser detectors.

In a second inventive aspect, the invention provides a method for weapons training, comprising:
attaching the WTA according to the invention to a weapon;
inserting the magazine into the magazine well of the weapon to load virtual rounds; and
charging the weapon with a bolt of the weapon to chamber one of the virtual rounds.

In a further embodiment, the method further comprises detecting a trigger press by the trigger detector and firing one of the virtual rounds.

In a further embodiment, the firing of one of the virtual rounds comprises one or more of: decreasing the number of available virtual rounds in the magazine, causing a laser transmission from a laser transmitter on the SAT, causing a sound from the speaker, or causing a light flash from shot-flash light.

In a further embodiment, the method further comprises that, when the virtual rounds are exhausted, requiring removal and reinsertion of the magazine for reloading virtual rounds.

In a further embodiment, the method further comprises charging of the bolt for chambering one of the virtual rounds for firing.

In a further embodiment, the method further comprises detecting a hit by one of the magazine optical detectors or SAT optical detectors.

In a further embodiment, when a hit is detected, performing one or more of: emitting a sound, preventing further virtual shooting from the weapon, or flashing a light source.

In a further inventive aspect, the invention provides a weapons training assembly (WTA) for use with a real weapon comprising a plurality of optical detectors, wherein the plurality of optical detectors are adapted for attachment to the real weapon.

In a further embodiment, the WTA further comprises:
a magazine; and
a small arms transmitter (SAT),
wherein the plurality of optical detectors are provided on one or both of the magazine and/or the SAT and wherein the magazine and the SAT are adapted for attachment to the real weapon.

In a further embodiment, the weapons training assembly (WTA) for use with a real weapon comprises a bolt detector for attachment to the real weapon.

In a further embodiment, the WTA further comprises a plurality of optical detectors for attachment to the real weapon.

In a further embodiment, the WTA further comprises:
a magazine; and
a small arms transmitter (SAT),
wherein the plurality of optical detectors are provided on one or both of the magazine and/or the SAT, wherein the bolt detector is provided on the magazine, and wherein the magazine and the SAT are adapted for attachment to the real weapon.

In a further embodiment, the WTA further comprises a weapon adaptor attached to the magazine, wherein the bolt detector is provided on the weapon adaptor.

## Claims

1. - A weapons training assembly (WTA) for use with a weapon, comprising:
a magazine;
a small arms transmitter (SAT) including a laser transmitter;
an optical detector; and
a trigger detector.

2. - The WTA of claim 1, wherein the optical detector comprises SAT optical detectors mounted on the SAT.

3. - The WTA of any one of claims 1 and 2, further comprising one or more bolt detectors, wherein the one or more bolt detectors are positioned on the weapon adaptor.

4. - The WTA of any one of the above claims, wherein the trigger detector is configured to detect a trigger press without requiring contact with the trigger.

5. - The WTA of any one of the above claims, wherein the optical detector comprises magazine optical detectors mounted on the magazine.

6. - The WTA of claim 5, wherein the magazine is sized and adapted for insertion into a magazine well of the weapon.

7. - The WTA of claim 5, wherein the magazine comprises a component selected from the group consisting of a GPS receiver, a mobile data communication device, a short range communication device, an audio amplifier, a battery, a speaker, and a virtual-ammunition count indicator.

8. - The WTA of claim 5, wherein the magazine optical detectors and the SAT optical detectors are Multiple Integrated Laser Engagement System (MILES) compatible laser detectors.

9. - The WTA of any one of the above claims, wherein the SAT comprises a shot-flash light.

10. - A method for weapons training, comprising:
a) attaching the WTA of any one of claims 5-11 to a weapon;
b) inserting the magazine into the magazine well of the weapon to load virtual rounds; and
c) charging the weapon with a bolt of the weapon to chamber one of the virtual rounds.

11. - The method of claim 10, further comprising detecting a trigger press by the trigger detector and firing one of the virtual rounds.

12. - The method of claim 11, wherein the firing of one of the virtual rounds comprises one or more of: decreasing the number of available virtual rounds in the magazine, causing a laser transmission from a laser transmitter on the SAT, causing a sound from the speaker, or causing a light flash from shot-flash light.

13. - The method of claim 12, further comprising when the virtual rounds are exhausted, requiring removal and reinsertion of the magazine for reloading virtual rounds.

14. - The method of claim 13, further comprising, charging of the bolt for chambering one of the virtual rounds for firing.

15. - The method of any one of claims 10-14, further comprising detecting a hit by one of the magazine optical detectors or SAT optical detectors, and when a hit is detected, performing one or more of: emitting a sound, preventing further virtual shooting from the weapon, or flashing a light source.
